# EUROPEAN PATENT SPECIFICATION

(11) **EP 1 900 624 B1**
(45) Date of publication and mention of the grant of the patent: **27.07.2011**
(21) Application number: 07253481.1
(22) Date of filing: 03.09.2007
(51) Int. Cl.: B62K 11/04

(54) **Motorcycle with exhaust pipe comprising an oxygen concentration sensor**
Motorrad mit einem an dem Auspuffrohr angeordneten Sauerstoffkonzentrationssensor
Motocyclette équipée d'un capteur de concentration d'oxygène monté sur le tuyau d'échappement

(30) Priority: 14.09.2006 JP 2006249223
(43) Date of publication of application: 19.03.2008
(73) Proprietor: Yamaha Hatsudoki Kabushiki Kaisha, Iwata-shi, Shizuoka 438-8501 (JP)
(72) Inventor: Kojima, Yasukazu, Iwata-shi, Shizuoka-ken 438-8501 (JP); Goro, Yasushi, Iwata-shi, Shizuoka-ken 438-8501 (JP); Harada, Keiichi, Iwata-shi, Shizuoka-ken 438-8501 (JP)
(74) Representative: Schoppe, Fritz

(56) References cited:
- EP-A- 1 459 973

## Description

### BACKGROUND

The present invention relates to a motorcycle including an exhaust system connected to an engine and an oxygen concentration sensor connected to the exhaust system.

In some latest motorcycles, in view of improving exhaust gas characteristics and fuel efficiency, there is a case in which an air-fuel ratio is derived on the basis of an oxygen concentration in an exhaust gas detected by an oxygen concentration sensor and the amount of fuel supply to the engine is controlled so that the air-fuel ratio becomes a target ratio.

If such oxygen concentration sensor is provided in the exhaust system, it is common practice to dispose the oxygen concentration sensor in proximity to a collecting portion of a plurality of exhaust pipes and cover it with a protector to prevent being damaged by flying stones or the like while driving.

When the oxygen concentration sensor is covered with a protector as in the above-mentioned conventional motorcycle, the increased parts number can cause a cost rise.

EP 1 459 973 accordingly to the preamble of claim 1, discloses a method and apparatus for improving the engine mounting structure in a motorcycle. The low deck motorcycle has an oxygen sensor located in an exhaust pipe.

The present invention seeks to provide a motorcycle which can protect an oxygen concentration sensor from flying stones or the like without a cost rise.

### SUMMARY

The invention is defined in the claims.

An embodiment of the invention provides a motorcycle including a body frame, an engine mounted to the body frame, an exhaust system connected to the engine, and a sensor arranged in the exhaust system for detecting an oxygen concentration, in which: the body frame includes left and right frame members extending in a longitudinal direction of the vehicle and a cross member to which the left and right frame member are connected behind the engine; the exhaust system has an inclined portion extending rearward and upward from a lower part of the cross member; and the sensor is disposed between the cross member and the inclined portion.

In an embodiment of a motorcycle according to the invention, as the sensor is disposed between the cross member and the inclined portion, the lower side of the sensor is covered by the inclined portion and the front side of the sensor is covered by the engine and the cross member. Accordingly, the sensor can be prevented from being damaged by flying stones or the like.

Further, an embodiment of the invention can utilize existing vehicle components to cover the sensor without additional parts to provide such a protector. Accordingly, a cost rise can be prevented.

### BRIEF DESCRITPION OF THE DRAWINGS

An embodiment of the present invention will now be described, by way of example, with reference to the attached drawings.
FIG. 1 is a side view of a motorcycle including an exhaust system according to an embodiment of the present invention.
FIG. 2 is a side view of the exhaust system.
FIG. 3 is a plan view of the exhaust system.
FIG. 4 is a front view of exhaust pipes of the exhaust system.
FIG. 5 is a front view of the exhaust system.
FIG. 6 is a side view of exhaust pipes of the exhaust system.
FIG. 7 is a plan view of exhaust pipes and collecting portions of the exhaust system.
FIG. 8 is a view of the exhaust pipes as seen in a cross-section taken along the vehicle width direction (cross-sectional view taken along the line VIIIa-VIIIa, VIIIb-VIIIb of FIG. 4).
FIG. 9 is a cross-sectional view of the collecting portion (cross-sectional view taking along the line IX-IX of FIG. 2).
FIG. 10 is a cross-sectional view of the collecting portion (cross-sectional view taking along the line X-X of FIG. 2).
FIG. 11 is a cross-sectional view of an oxygen concentration sensor arranged in the collecting portion (cross-sectional view taking along the line XI-XI of FIG. 7).

### DESCRIPTION OF EMBODIMENTS

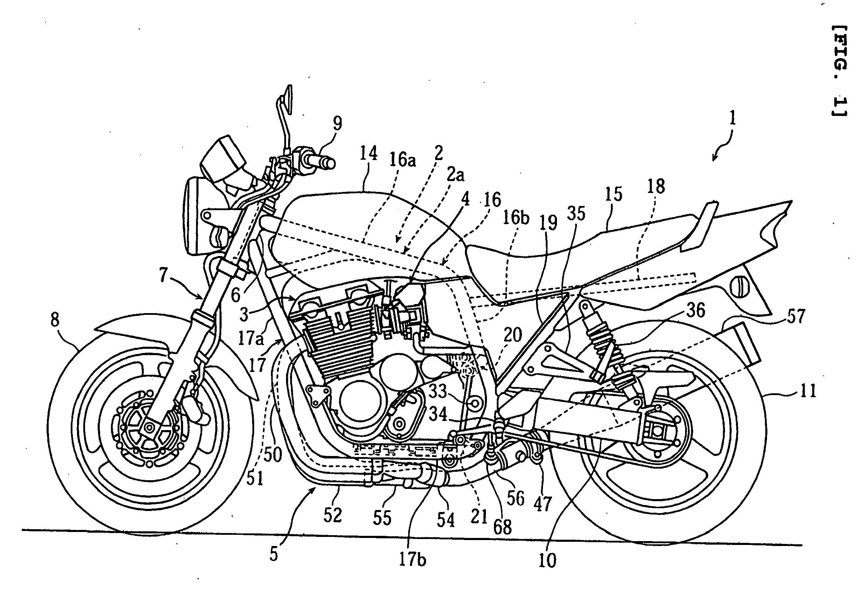

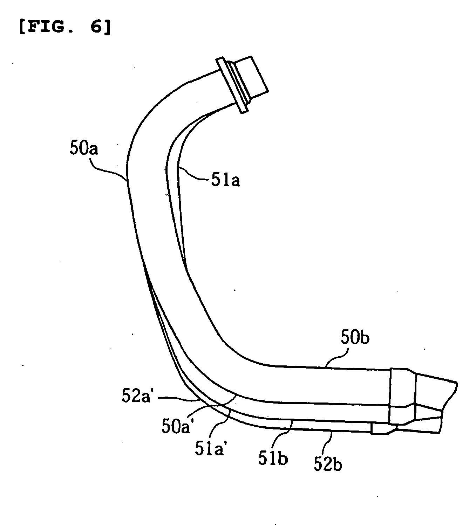

FIGs. 1 to 11 are views illustrating a motorcycle according to an embodiment of the present invention. Herein, the terms front and rear as used in this embodiment means the front and rear as viewed by the rider seated on the seat, and the terms left and right means the left and right as viewed from the front of the vehicle.

In the drawings, reference numeral 1 denotes a motorcycle. The motorcycle 1 includes a double-cradle type body frame 2, an engine 3 mounted inside the cradle of the body frame 2, and an intake system 4 and an exhaust system 5 that are connected to the engine 3.

A front fork 7 is supported by a head pipe 6 arranged at the front end of the body frame 2 so as to be steerable to the left and right. A front wheel 8 and a steering handlebar 9 are respectively arranged at the lower and upper end portions of the front fork 7.

The front end portion of a rear arm 10 is supported by a rear portion of the body frame 2 so as to be vertically swingable. A rear wheel 11 is arranged at the rear end portion of the rear arm 10. A fuel tank 14 is arranged above the engine 3 in the body frame 2, and a seat 15 is arranged on the rear side of the fuel tank 14.

The body frame 2 includes left and right frame members 2a, 2a, and upper and lower cross members 20, 21 made of steel pipes that connect the rear arm supporting portions 16b, 16b located at the rear end portions of the left and right frame members 2a to each other.

The left and right frame members 2a are substantially laterally symmetrical. The left and right frame members 2a include left and right upper tubes 16, 16, which have tank rail portions 16a, 16a extending slightly downward to the rear from an upper portion of the head pipe 6 and rear-arm supporting portions 16b, 16b extending rearwardly downward from the rear ends of the tank rail portions 16a, and left and right down tubes 17, 17, which have inclined portions 17a, 17a extending obliquely downward to the rear from a lower portion of the head pipe 6 and horizontal portions 17b, 17a extending substantially horizontally to the rear from the lower ends of the inclined portions 17a.

Further, the left and right frame members 2a, 2a include left and right seat rails 18, 18 extending obliquely upward to the rear from the upper end portions of the left and right rear-arm supporting portions 16b, and left and right seat stays 19, 19 that connect between longitudinally midway portions of the seat rails 18 and lower portions of the rear-arm supporting portions 16b.

The upper cross member 20 is arranged in each of the vertically halfway portions of the left and right rear-arm supporting portions 16b, 16b.

The lower cross member 21 is arranged at the connecting portion between the lower end portion of each of the left and right rear-arm supporting portions 16b, and the rear end portion of each of the left and right horizontal portions 17b.

The engine 3 is a water-cooled four-cycle, parallel four-cylinder engine. The engine 3 is mounted with the cylinder axis tilted forward, and is suspended and supported by the left and right upper tubes 16 and the left and right down tubes 17.

The engine 3 has a structure in which a cylinder block 27, a cylinder head 28, and a head cover 29 are stacked in order on the upper mating surface of a crankcase 26 in which a crankshaft 25 is accommodated, a transmission case 26a in which a transmission mechanism (not shown) is accommodated is integrally formed and connected to a rear portion of the crankcase 26, and an oil sump 30 is connected to the bottom portion of the crankcase 26.

Generally triangular rear-arm brackets 32, 32 are connected on the front side of the left and right rear-arm supporting portions 16b so as to be positioned inside the cradle. The rear arm 10 is supported by the left and right rear-arm supporting brackets 32 via a pivot shaft 33.

On the rear side of the lower end portions of the left and right rear-arm supporting portions 16b, footrests 34, 34 on which the rider places his/her feet are arranged so as to project outward in the vehicle width direction.

The front end portions of generally triangular foot brackets 35, 35 that extend rearward are connected to the left and right seat stays 19. A tandem footrest 36 on which the passenger in the rear portion places his/her feet is arranged at the rear end portion of each of the foot brackets 35.

A downwardly C-shaped stand bracket 37 that extends downward is connected to the lower cross member 21. A main stand 38 is arranged in the stand bracket 37 so as to be pivotable between an upright position in which the main stand 38 holds the vehicle body, and a retracted position in which the main stand 38 is substantially in parallel to the horizontal portions 17b of the down tubes 17.

The main stand 38 includes a stand body 38b having left and right leg portions 38a, 38a, and a footstep arm portion 38c formed so as to extend to the outside of the vehicle from the leg portion 38a on the right side.

The intake system 4 includes four intake pipes 40 connected to a rear wall 28a of the cylinder head 28 for respective cylinders, a throttle body 41 connected to each intake pipe 40, and a common air cleaner connected to each throttle body 41.

A fuel injection valve 45 for injecting fuel to supply into an intake port (not shown) formed in the cylinder head 28 is fitted to the downstream end portion of each of the intake pipes 40.

The exhaust system 5 includes first to fourth exhaust pipes 50, 51, 52, 53, which are connected to exhaust ports formed in a front wall 28b of the cylinder head 28 for respective cylinders and extend downward from the front wall 28b and then extends rearward while passing below the engine 3, a right-side collecting portion 54 where the first and second exhaust pipes 50, 51 are gathered together, a left-side collecting portion 55 where the third and fourth exhaust pipes 52, 53 are gathered together, a main collecting portion 56 where the left-side and right-side collecting portions 54, 55 are gathered together, and a single muffler 57 connected to a rearwardly extended portion (inclined portion) 56b forming a part of the main collecting portion 56.

The first to fourth exhaust pipes 50 to 53, the right-side and left-side collecting portions 54, 55, and the main collecting portion 56 are joined integrally by welding. The muffler 57 is detachably connected to the rearwardly extended portion 56b of the main collecting portion 56 by a band member 47.

Upstream-side catalysts 48, 48 for performing purification of an exhaust gas are arranged inside the right-side and left-side collecting portions 54, 55. A downstream-side catalyst 49 for performing purification of an exhaust gas is arranged inside the muffler 57.

The muffler 57 is arranged so as to be oriented obliquely upward on the left side (other side) in the vehicle width direction of the rear wheel 11. As seen in plan view, the muffler 57 has a cylindrical rear-side muffler portion 57b that extends substantially in parallel to the vehicle body centerline C, and a substantially conical front-side muffler portion 57c that extends from the front end of the rear-side muffler portion 57b so as to be bent toward the vehicle body centerline C.

Further, as seen from the right side of the vehicle, most part of the muffler 57 is located within the projection plane of the rear wheel 11. The catalyst 49 is arranged at the boundary between the front-side and rear-side muffler portions 57c, 57b.

A mounting strip 57a is formed in the upper wall of the rear-side muffler portion 57b of the muffler 57 so as to project upward. The mounting strip 57a is mounted and fixed on the rear side of the tandem footrest 36 of the left foot bracket 35.

A flat mounting bracket 58 is connected to the right-side and left-side collecting portions 54, 55 so as to bridge the upper ends of the respective collecting portions 54, 55. A mounting hole 58a is formed in the mounting bracket 58 so as to be positioned between the two collecting portions 55, 54.

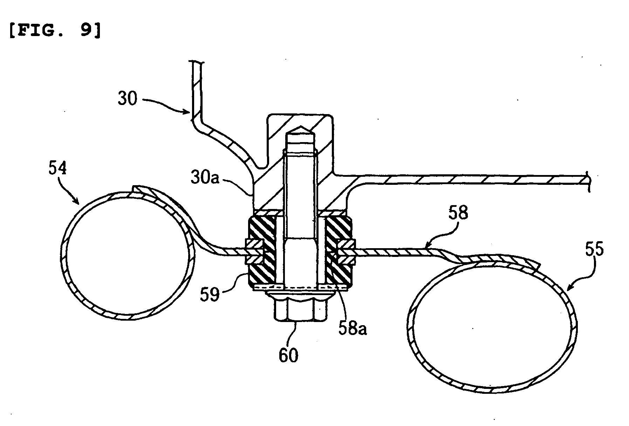

As shown in FIG. 9, which is a cross-sectional view of the right-side and left-side collecting portions 54, 55 as seen from the rear of the vehicle, a grommet 59 is fitted onto the mounting hole 58a. Further, a boss portion 30a is formed at the bottom portion of the oil sump 30. The mounting bracket 58 is mounted to the boss portion 30a through the intermediation of the grommet 59 by means of a bolt 60 that is inserted from below. The right-side and left-side collecting portions 54, 55 are thus elastically supported on the oil sump 30.

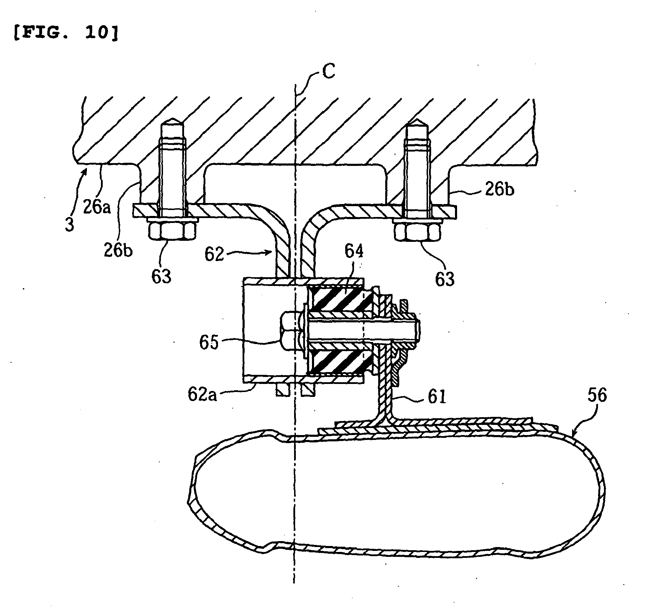

As shown in FIG. 10, which is a cross-sectional view of the main collecting portion 56 as seen from the rear of the vehicle, a mounting bracket 61 is connected to the upstream-side end portion of the main collecting portion 56 so as to project upward. Further, a pair of left and right boss portions 26b, 26b are formed at the bottom portion of the transmission case 26a of the crankcase 26. A substantially T-shaped stay 62 is fixed to the respective boss portions 26b by means of bolts 63, 63 that are threadedly inserted from below. A cylinder member 62a is arranged in and fixed to the stay 62 with its axis oriented in the vehicle width direction. A grommet 64 is inserted and fixed inside the cylinder member 62a.

The mounting bracket 61 is mounted to the stay 62 via the grommet 64 by means of a bolt 65 inserted in the vehicle width direction. The main collecting portion 56 is thus elastically supported on the crankcase 26.

The right-side collecting portion 54 has a bifurcated connecting portion 54a to which the first and second exhaust pipes 50, 51 are connected, a small-diameter portion 54b continuous to the connecting portion 54a and formed so as to have a smaller passage area, and a large-diameter portion 54c continuous to the small-diameter portion 54b and formed so as to have a larger passage area. The catalyst 48 is arranged in the large-diameter portion 54c.

Like the right-side collecting portion 54, the left-side collecting portion 55 has a bifurcated connecting portion 55a to which the third and fourth exhaust pipes 52, 53 are connected, a small-diameter portion 55b, and a large-diameter portion 55c. The catalyst 48 is arranged in the large-diameter portion 55c.

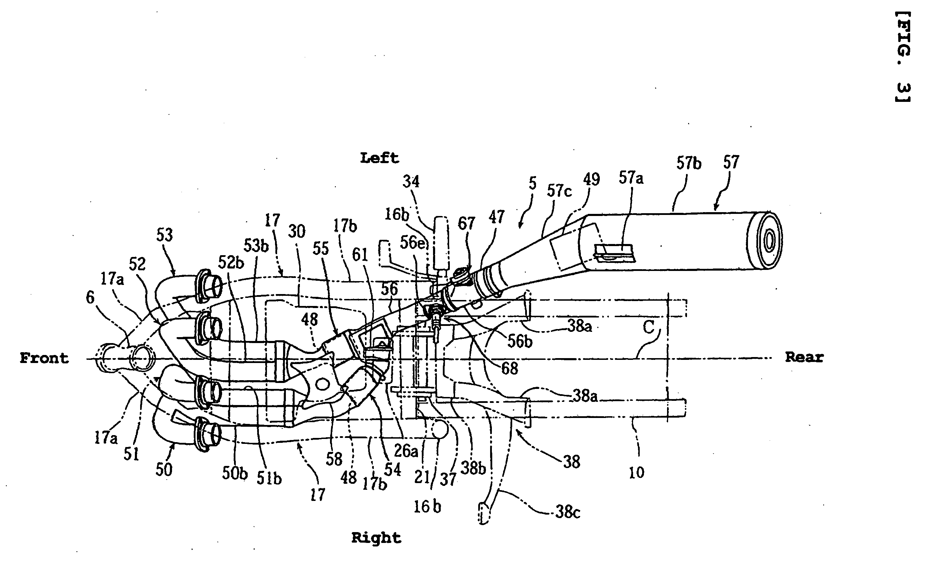

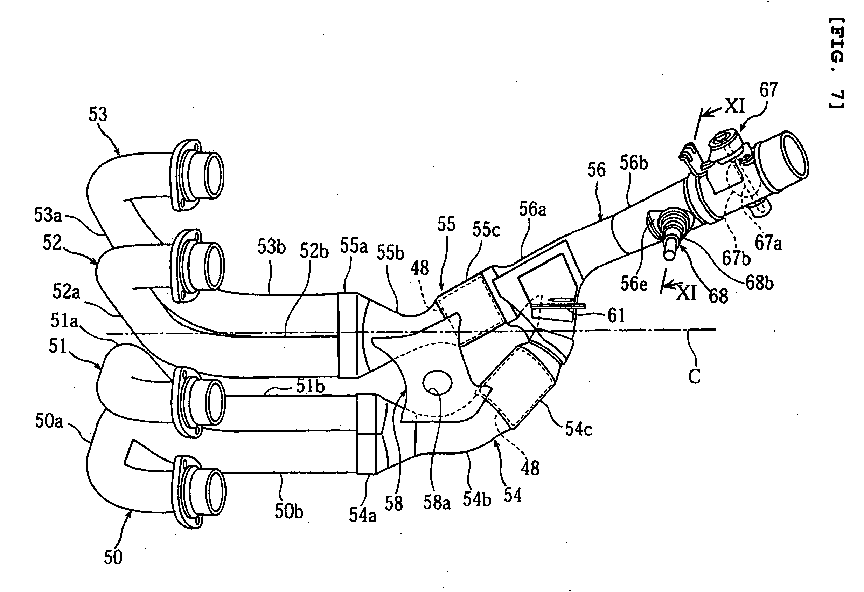

As shown in FIGs. 3, 7, as seen in plan view, the right-side and left-side collecting portions 54, 55 are displaced to the right side in the vehicle width direction with respect to a vehicle body centerline C. That is, with the left-side and right-side collecting portions 54, 55 seen as a single mass, its center is displaced to the right side in the vehicle width direction. It should be noted that the centerline of the engine 3 in the vehicle width direction coincides with the vehicle body centerline C.

The connecting portion 54a of the right-side collecting portion 54 is displaced to the right side in the vehicle width direction with respect to the vehicle body centerline C and arranged in proximity to the right down tube 17. The small-diameter portion 54b is formed so as to be bent in an L shape to the left side in the vehicle width direction from the connecting portion 54a. The downstream-side end portion of the large-diameter portion 54c is in proximity to the vehicle body centerline C.

The connecting portion 55a of the left-side collecting portion 55 is arranged such that its center substantially coincides with the vehicle body centerline C. The small-diameter portion 55b is formed so as to be bent in an L shape to the left side in the vehicle width direction on the vehicle body centerline C. The large-diameter portion 55c is arranged with its inner end portion overlapping the vehicle body centerline C. In other words, the large-diameter portions 54c, 55c of the right-side and left-side collecting portions 54, 55 are displaced to the left side in the vehicle width direction with respect to the connecting portions 54a, 55a.

As seen in plan view, the main collecting portion 56 is arranged so as to be positioned on the left side in the vehicle width direction with respect to the vehicle body centerline C. The main collecting portion 56 has a bifurcated connecting portion 56a to which the right-side and left-side collecting portions 54, 55 are connected, and the rearwardly extended portion (exhaust passage inclined portion) 56b. The rearwardly extended portion 56b extends in a substantially linear fashion obliquely outward to the left from the connecting portion 56a and, as seen from the lateral side, extends obliquely upward.

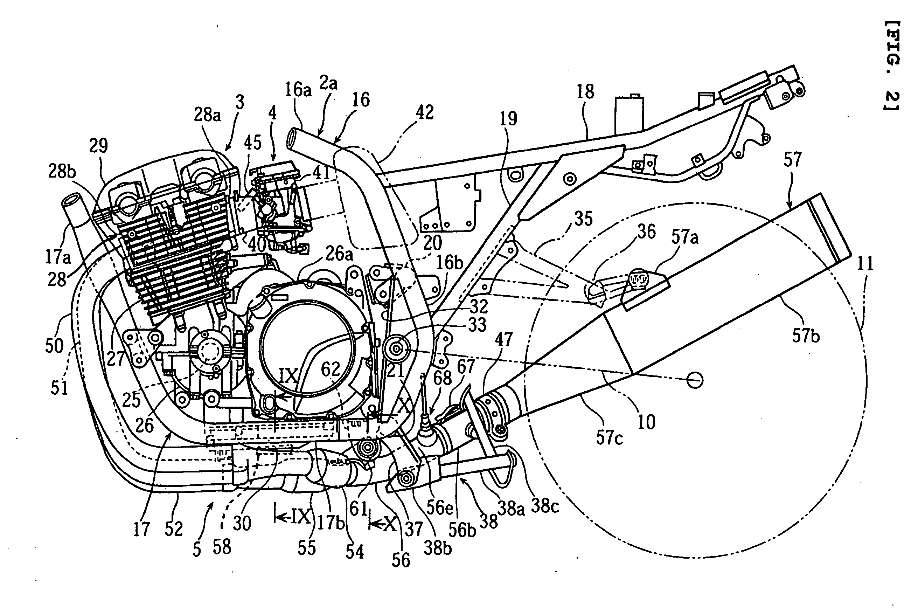

As shown in FIGs. 2, 3, the rearwardly extended portion 56b extends rearward so as to pass through a space between the left-side footrest 34 and the main stand 38, from a position in rear of the engine 3 and below the lower cross member 21. The muffler 57 is connected to the rear end portion of the rearwardly extended portion 56b.

The first to fourth exhaust pipes 50 to 53 has front-side exhaust pipe portions 50a to 53a that extend obliquely downward from first to fourth exhaust ports in the front wall 28b of the cylinder head 28 toward the right side (one side) in the vehicle width direction, and rear-side exhaust pipe portions 50b to 53b that extend rearward from the lower end portions of the front-side exhaust pipe portions 50a to 53a while being bent so as to pass below the oil sump 30 of the engine 3. The detailed structure of the first to fourth exhaust pipes 50 to 53 is as described below.

The right down tube 17 is positioned between the first and second exhaust pipes 50, 51, and the left down tube 17 is positioned between the third and fourth exhaust pipes 52, 53. The vehicle body centerline C is positioned at substantially the middle in the vehicle width direction between the second and third exhaust pipes 51, 52.

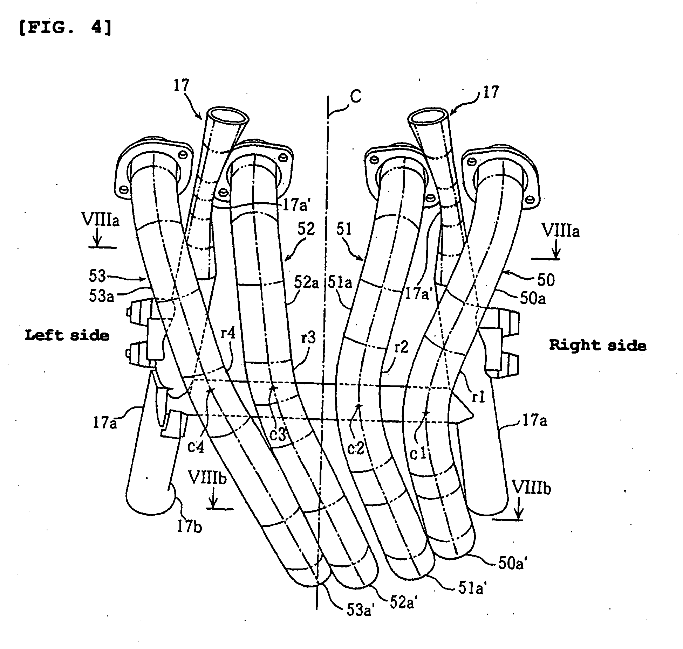

As seen from the lateral side of the vehicle, the first to fourth front-side exhaust pipe portions 50a to 53a are positioned forward of the inclined portions 17a of the left and right down tubes 17, and crossing portions 17a' of the left and right inclined portions 17a with the front-side exhaust pipe portions 50a to 53a have an elliptic cross section crushed in the vehicle width direction (see FIG. 4). This prevents interference from occurring as the inclined portions 17a, 17a of the down tubes 17 pass between the respective front-side exhaust pipe portions 50a, 51a and 52a, 53a.

The first and second rear-side exhaust pipe portions 50b, 51b extend linearly to the rear while in contact with each other from the lower end portions of the front-side exhaust pipe portions 50a, 51a and are connected to the right-side collecting portion 54. Likewise, the third and fourth rear-side exhaust pipe portions 52b, 53b are connected while in contact with each other to the left-side collecting portion 55.

As seen from the front, the first and second front-side exhaust pipe portions 50a, 51a first extend obliquely downward to the inner side toward the vehicle body centerline C from the connecting portions with the exhaust ports, that is, from the upstream end portions, and then extend obliquely downward while being bent to the outer side at bending R portions r1, r2. The first and second front-side exhaust pipe portions 50a, 51a are thus generally shaped in an L shape as a whole.

The third and fourth front-side exhaust pipe portions 52a, 53a extend obliquely downward from their upstream end portions toward the vehicle body centerline C while being gently curved at bending R portions r3, r4. The lower end portion of the third front-side exhaust pipe portion 52a extends to the right side in the vehicle width direction beyond the vehicle body centerline C, and the lower end portion of the fourth front-side exhaust pipe portion 53a extends so as to overlap the vehicle body centerline C.

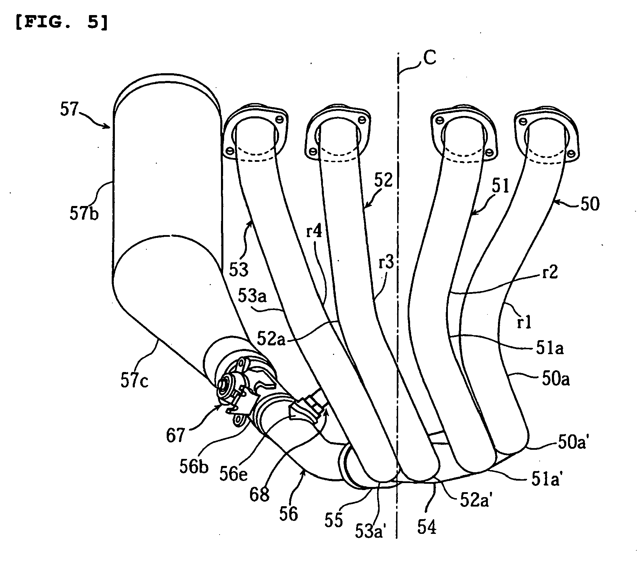

As seen from the front of the vehicle, each of the bending R portions r1, r2, r3, r4 has a center of curvature positioned on one side (right side) in the vehicle width direction with respect to the center of each of the front-side exhaust pipes, and is thus bent so as to form a convex facing toward the other side in the vehicle width direction. Further, the radii of the bending R's of the bending R portions r1, r2 of the first and second front-side exhaust pipe portions 50a, 51a are set to values smaller than the radii of the bending R's of the bending R portions r3, r4 of the third and fourth front-side exhaust pipe portions 52a, 53a (see Figs. 4, 5).

Furthermore, top portions c3, c4 of the bending R's of the bending R portions r3, r4 of the third and fourth front-side exhaust pipe portions 52a, 53a are positioned higher than top portions c1, c2 of the bending R's of the bending R portions r1, r2 of the first and second front-side exhaust pipe portions 50a, 51a.

As seen in a cross-section taken transversely of the vehicle width direction, the upstream-side portion (line VIIIa-VIIIa in FIG. 4) and downstream-side portion (line VIIIb-VIIIb in FIG. 4) of each of the first to fourth front-side exhaust pipe portions 50a to 53a with respect to the bending R portions r1 to r4 have the following structure.

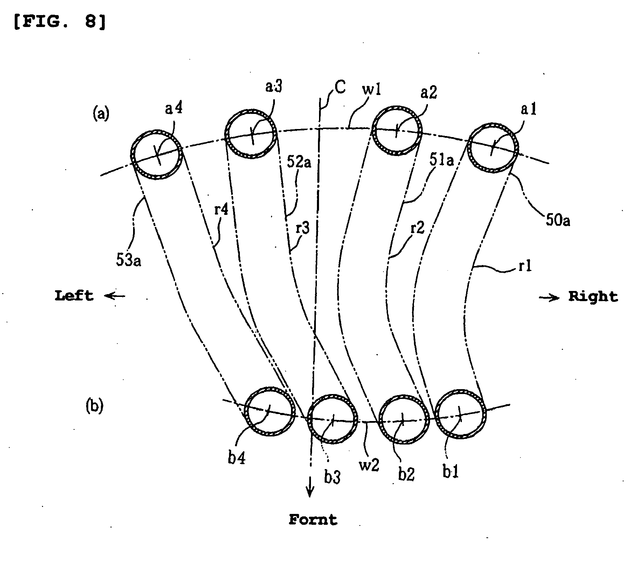

As shown in FIG. 8, a curve w1 connecting the centers a1 to a4 of the first to fourth front-side exhaust pipe portions 50a to 53a in the upstream-side portion, forms a concave widening toward the front of the vehicle. Further, a curve w2 connecting the centers b1 to b4 of the first to fourth front-side exhaust pipe portions 50a to 53a in the downstream-side portion, forms a convex narrowing toward the front of the vehicle. In other words, in the upstream-side portion, the second and third front-side exhaust pipe portions 51a, 52a are positioned on the rear side with respect to the first and fourth front-side exhaust pipe portions 50a, 53a, and in the downstream-side portion, the second and third front-side exhaust pipe portions 51a, 52a are positioned on the front side with respect to the first and fourth front-side exhaust pipe portions 50a, 53a.

As seen from the front of the vehicle, lower end bent portions 50a', 51a' of the first and second front-side exhaust pipe portions 50a, 51a are formed on the outer side in the vehicle width direction with respect to, and positioned higher than, lower end bent portions 52a', 53a' of the third and fourth front-side exhaust pipe portions 52a, 53a. Further, the lower end bent portion 50a' of the first front-side exhaust pipe portion 50a is formed so as to be positioned higher than the lower end bent portion 51a' of the second front-side exhaust pipe portion 51a.

Accordingly, as seen from the lateral side of the vehicle, the first and second rear-side exhaust pipe portions 50b, 51b are arranged at positions higher than the third and fourth rear-side exhaust pipe portions 52b, 53b, and further the first rear-side exhaust pipe portion 50b is arranged at a position higher than the second rear-side exhaust pipe portion 51b. The bank angle becomes large as a result.

The exhaust system 5 includes an exhaust valve 67. The exhaust valve 67 is arranged at the downstream-side end portion of the rearwardly extended portion 56b of the main collecting portion 56 and on the upstream side of the downstream-side catalyst 49, and is formed by arranging a valve plate 67b, which causes the passage area inside the main collecting portion 56 to change, on a valve shaft 67a that radially extends through the main collecting portion 56 (see FIG. 7). The valve shaft 67a is arranged in a titled manner so that its position is higher on the outer side in the vehicle width direction. A drive cable (not shown) is connected to the valve shaft 67a.

The exhaust system 5 has an oxygen concentration sensor 68 that detects the concentration of oxygen in an exhaust gas. An air fuel ratio is found on the basis of the oxygen concentration detected by the oxygen concentration sensor 68, and the amount of fuel supply from the fuel injection valve 45 is controlled so that this air-fuel ratio becomes a target air-fuel ratio.

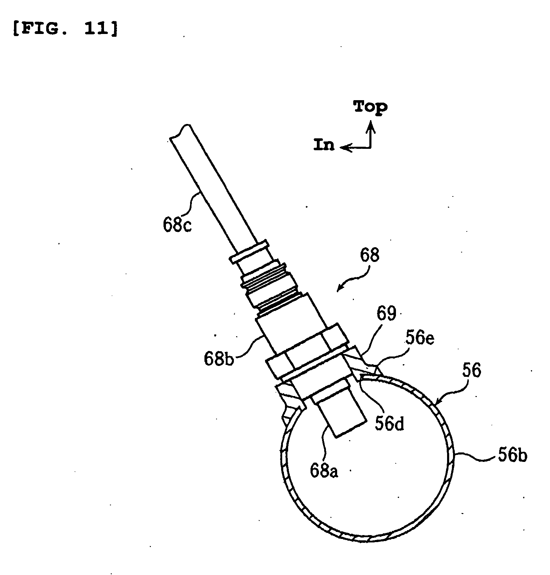

The oxygen concentration sensor 68 has a detecting portion 68a inserted with its distal end portion positioned inside the rearwardly extended portion 56b of the main collecting portion 56, a sensor body 68b connected to the detecting portion 68a, and an external connection cable 68c for leading a detection signal to the outside from the detecting portion 68a (see FIG. 11).

A sensor fitting hole 56d is formed in the rearwardly extended portion 56b of the main collecting portion 56. A nut member 69 is connected to the fitting hole 56d in an airtight manner. The oxygen concentration sensor 68 is detachably mounted to the main collecting portion 56 by fastening and fixing the sensor body 68b to the nut member 69 in an airtight manner.

The oxygen concentration sensor 68 is arranged in an upper wall portion 56e of the rearwardly extended portion 56b of the main collecting portion 56, and on the upstream side in front of the exhaust valve 67. The oxygen concentration sensor 68 thus detects the concentration of oxygen in the exhaust gas that has passed through each of the left and right upstream-side catalysts 48, 48.

The oxygen concentration sensor 68 is arranged in a tilted manner so that the upper portion of the sensor body 68b is positioned on the inner side in the vehicle width direction and upward. Further, as seen in the longitudinal direction of the vehicle, the oxygen concentration sensor 68 is arranged so as to cross the exhaust valve 67.

As seen from the lateral side of the vehicle, the oxygen concentration sensor 68 is arranged between the engine 3 and the rear wheel 11, and so as to be positioned substantially at the same height as the lower cross member 21.

Further, the oxygen concentration sensor 68 is arranged so as to be positioned above the main stand 38 that is in the retracted position, positioned below the rear arm 10 and on its outer side in the vehicle width direction, and positioned on the inner side in the vehicle width direction of the footrest 34 on the left side.

Accordingly, as seen from the lateral side, the oxygen concentration sensor 68 is surrounded by the lower cross member 21, the stand bracket 37, the stand body 38b, the footstep arm portion 38c, the rear-arm supporting portion 16b, and the rear arm 10.

According to this embodiment, the oxygen concentration sensor 68 is arranged behind the engine 3 and the cross member 21 so as to be positioned substantially at the same height as the lower cross member 21 and in an upper wall portion 56e of the rearwardly extended portion (exhaust passage inclined portion) 56b of the main collecting portion 56. Therefore, the oxygen concentration sensor 68 is covered by the inclined portion 56b of the main collecting portion 56 for its bottom side and by the engine 3 and the lower cross member 21 for its front side. Accordingly, the oxygen concentration sensor 68 can be prevented from being damaged by flying stones or the like.

Further, the present invention utilizes existing vehicle components 3, 21, 56 to cover the oxygen concentration sensor 68. Accordingly, in comparison with a case that additional parts such as protector are used, an increase of parts number and a cost rise can be prevented.

In this embodiment, since the oxygen concentration sensor 68 is arranged in the main collecting portion 56 where exhaust pipes 50 to 53 collect, precise oxygen detection of the exhaust gas from each cylinder can be achieved by single oxygen concentration sensor 68.

In this embodiment, since the oxygen concentration sensor 68 is arranged so as to be positioned above the main stand 38 that is in the retracted position, existing main stand 38 is utilized to cover the lower side of the oxygen concentration sensor 68, thereby reliably preventing damages by flying stones or the like.

In this embodiment, since the oxygen concentration sensor 68 is arranged to be tilted upward and inward with respect to the vehicle width direction, interferences with a foot of the rider or the like and infection to the bank angle can be prevented.

Further, in this embodiment, since the oxygen concentration sensor 68 is arranged on the inner side of the footrest 34 on which the rider places his/her foot, interferences with a foot of the rider and damages by external forces from lateral side can be prevented.

In this embodiment, since the oxygen concentration sensor 68 is arranged on the front and the upstream side of the exhaust valve 67, the oxygen concentration sensor 68 can detect the oxygen concentration of the exhaust gas while the exhaust valve 67 is closed.

In this embodiment, since the oxygen concentration sensor 68 is arranged below the rear arm 10 and on its outer side in the vehicle width direction, existing rear arm 10 is utilized to cover the upper side of the oxygen concentration sensor 68.

In this embodiment, since the oxygen concentration sensor 68 is, as seen from the lateral side of the vehicle, surrounded by the lower cross member 21, the stand bracket 37, the stand body 38b, the footstep arm portion 38c, the rear-arm supporting portion 16b, and the rear arm 10, protection of the oxygen concentration sensor 68 from external forces can be reliably achieved.

### DESCRIPTION OF REFERENCE NUMERALS AND SYMBOLS

1: motorcycle
2: body frame
3: engine
5: exhaust system
10: rear arm
11: rear wheel
16b: left and right rear-arm supporting portion (left and right frame member)
21: lower cross member (cross member)
34: footrest
38: main stand
50 to 53: exhaust pipe
56: main collecting portion (collecting portion)
56b: rearwardly extended portion (inclined portion)
56e: upper wall portion
67: exhaust valve
68: oxygen concentration sensor

## Claims

1. A motorcycle (1) comprising a body frame (2), an engine (3) mounted to the body frame, an exhaust system (5) connected to the engine, and a sensor (68) arranged in the exhaust system for detecting an oxygen concentration;
**characterized in that :**
the body frame includes left and right frame members (16b) extending in a longitudinal direction of the vehicle and a cross member (21) to which the left and right frame member are connected behind the engine;
the exhaust system has an inclined portion (56b) extending rearward and upward from a lower part of the cross member; and
the sensor is arranged between the cross member and the inclined portion.

2. The motorcycle according to claim 1, wherein the sensor is arranged behind the cross member and in an upper part of the inclined portion.

3. The motorcycle according to Claim 1 or Claim 2, wherein the sensor is disposed substantially at the same height as the cross member.

4. The motorcycle according to any preceding Claim,
wherein: the exhaust system includes a plurality of exhaust pipes connected to the engine and a collecting portion where each exhaust pipe joins having the inclined portion; and
the sensor is arranged in the inclined portion of the collecting portion.

5. The motorcycle according to any preceding Claim, wherein the sensor is arranged in a tilted manner so that its upper portion is positioned on an inner side in a vehicle width direction.

6. The motorcycle according to any preceding Claim, further comprising a main stand attached to the body frame so as to be pivotable between a position in use and a retracted position,
wherein the sensor is positioned above the main stand that is in the retracted position.

7. The motorcycle according to any preceding Claim, further comprising a footrest attached to the body frame on which the rider places his/her foot,
wherein the sensor is positioned on an inner side of the footrest in a vehicle width direction.

8. The motorcycle according to any preceding Claim, further comprising a valve for changing a passage area of the exhaust system,
wherein the sensor is arranged on an upstream side of the valve.

9. The motorcycle according to any preceding Claim, further comprising a rear arm swingably supported by the body frame for its front end portion for supporting a rear wheel at its rear end portion,
wherein the sensor is arranged below the rear arm.

10. The motorcycle according to any preceding Claim, further comprising a rear arm swingably supported by the body frame for its front end portion for supporting a rear wheel at its rear end portion,
wherein as seen from the lateral side of the vehicle, the sensor is arranged between the engine and the rear wheel.

## Patentansprüche

1. Ein Motorrad (1), das einen Fahrzeugrahmen (2), einen Motor (3), der an dem Fahrzeugrahmen befestigt ist, ein Auspuffsystem (5), das mit dem Motor verbunden ist und einen Sensor (68), der in dem Auspuffsystem zum Erfassen einer Sauerstoffkonzentration angeordnet ist, aufweist;
**dadurch gekennzeichnet, dass:**
der Fahrzeugrahmen ein linkes und rechtes Rahmenbauglied (16b) umfasst, die sich in einer Längsrichtung des Fahrzeugs erstrecken, und ein Kreuzbauglied (21), an dem das linke und rechte Rahmenbauglied hinter dem Motor verbunden sind;
wobei das Auspuffsystem einen geneigten Abschnitt (56b) aufweist, der sich rückwärts und aufwärts von einem unteren Teil des Kreuzbauglieds erstreckt; und
der Sensor zwischen dem Kreuzbauglied und dem geneigten Abschnitt angeordnet ist.

2. Das Motorrad gemäß Anspruch 1, bei dem der Sensor hinter dem Kreuzbauglied und in einem oberen Teil des geneigten Abschnitts angeordnet ist.

3. Das Motorrad gemäß Anspruch 1 oder Anspruch 2, bei dem der Sensor im Wesentlichen auf derselben Höhe angeordnet ist wie das Kreuzbauglied.

4. Das Motorrad gemäß einem der vorangehenden Ansprüche, bei dem:
das Auspuffsystem eine Mehrzahl von Auspuffrohren umfasst, die mit dem Motor verbunden sind, und einen Sammelabschnitt, wo jedes Auspuffrohr mit dem geneigten Abschnitt verbunden ist; und
der Sensor in dem geneigten Abschnitt des Sammelabschnitts angeordnet ist.

5. Das Motorrad gemäß einem der vorangehenden Ansprüche, bei dem der Sensor auf gekippte Weise angeordnet ist, so dass sein oberer Abschnitt auf einer Innenseite in einer Fahrzeugbreitenrichtung positioniert ist.

6. Das Motorrad gemäß einem der vorangehenden Ansprüche, das ferner einen Hauptständer aufweist, der an dem Fahrzeugrahmen angebracht ist, um zwischen einer Verwendungsposition und einer eingefahrenen Position schwenkbar zu sein,
wobei der Sensor über dem Hauptständer positioniert ist, der in der eingefahrenen Position ist.

7. Das Motorrad gemäß einem der vorangehenden Ansprüche, das ferner eine Fußauflage aufweist, die an dem Fahrzeugrahmen angebracht ist, auf der der Fahrer seinen/ihren Fuß platziert,
wobei der Sensor auf einer Innenseite der Fußauflage in einer Fahrzeugbreitenrichtung positioniert ist.

8. Das Motorrad gemäß einem der vorangehenden Ansprüche, das ferner ein Ventil aufweist zum Ändern eines Durchgangsbereichs des Auspuffsystems,
wobei der Sensor auf einer stromaufwärts gelegenen Seite des Ventils angeordnet ist.

9. Das Motorrad gemäß einem der vorangehenden Ansprüche, das ferner einen hinteren Arm aufweist, der schwingbar durch den Fahrzeugrahmen gestützt ist für dessen Vorderendenabschnitt zum Stützen eines Hinterrades an dessen Hinterendenabschnitt,
wobei der Sensor unter dem hinteren Arm angeordnet ist.

10. Das Motorrad gemäß einem der vorangehenden Ansprüche, das ferner einen hinteren Arm aufweist, der schwingbar durch den Fahrzeugrahmen gestützt ist für dessen Vorderendenabschnitt zum Stützen des Hinterrades an dessen Hinterendenabschnitt,
wobei, wie aus der Seitenansicht des Fahrzeugs ersichtlich ist, der Sensor zwischen dem Motor und dem Hinterrad angeordnet ist.

## Revendications

1. Motocyclette (1) comprenant une ossature de carrosserie (2), un moteur (3) monté sur l'ossature de carrosserie, un système d'échappement (5) connecté au moteur, et un capteur (68) disposé dans le système d'échappement et destiné à détecter une concentration en oxygène;
**caractérisé par le fait que:**
l'ossature de carrosserie comprend des éléments de carrosserie gauche et droit (16b) s'étendant dans une direction longitudinale du véhicule et un élément transversal (21) auquel sont connectés les éléments de carrosserie gauche et droit derrière le moteur;
le système d'échappement présente une partie inclinée (56b) s'étendant vers l'arrière et vers le haut à partir d'une partie inférieure de l'élément transversal; et
le capteur est disposé entre l'élément transversal et la partie inclinée.

2. Motocyclette selon la revendication 1, dans laquelle le capteur est disposé derrière l'élément transversal et dans une partie supérieure de la partie inclinée.

3. Motocyclette selon la revendication 1 ou la revendication 2, dans laquelle le capteur est disposé sensiblement à la même hauteur que l'élément transversal.

4. Motocyclette selon l'une quelconque des revendications précédentes,
dans laquelle le système d'échappement comprend une pluralité de tuyaux d'échappement connectés au moteur et une partie collectrice où se rejoint chaque tuyau d'échappement qui présente une partie inclinée; et
le capteur est disposé dans la partie inclinée de la partie collectrice.

5. Motocyclette selon l'une quelconque des revendications précédentes, dans laquelle le capteur est disposé de manière oblique, de sorte que sa partie supérieure soit positionnée d'un côté intérieur dans le sens de la largeur du véhicule.

6. Motocyclette selon l'une quelconque des revendications précédentes, comprenant par ailleurs une béquille principale fixée à l'ossature de carrosserie de manière à pouvoir pivoter entre une position d'utilisation et une position rentrée,
dans laquelle le capteur est positionné au-dessus de la béquille principale qui se trouve en position rentrée.

7. Motocyclette selon l'une quelconque des revendications précédentes, comprenant par ailleurs un repose-pied fixé à l'ossature de carrosserie sur lequel le conducteur pose le pied,
dans laquelle le capteur est positionné du côté intérieur du repose-pied dans le sens de la largeur du véhicule.

8. Motocyclette selon l'une quelconque des revendications précédentes, comprenant par ailleurs une soupape destinée à modifier une superficie de passage du système d'échappement,
dans laquelle le capteur est disposé d'un côté amont de la soupape.

9. Motocyclette selon l'une quelconque des revendications précédentes, comprenant par ailleurs un bras arrière supporté de manière pivotable par l'ossature de carrosserie pour sa partie avant pour supporter une roue arrière à sa partie arrière,
dans lequel le capteur est disposé au-dessous du bras arrière.

10. Motocyclette selon l'une quelconque des revendications précédentes, comprenant par ailleurs un bras arrière supporté de manière pivotable par l'ossature de carrosserie pour sa partie avant pour supporter une roue arrière à sa partie arrière,
dans lequel, tel que vu du côté latéral du véhicule, le capteur est disposé entre le moteur et la roue arrière.
